# EUROPÄISCHE PATENTSCHRIFT

(11) **EP 3 245 417 B1**
(45) Veröffentlichungstag und Bekanntmachung des Hinweises auf die Patenterteilung: **20.02.2019**
(21) Anmeldenummer: 15797604.4
(22) Anmeldetag: 21.11.2015
(51) Int. Cl.: F16D 55/226

(54) **PNEUMATISCH ODER ELEKTROMECHANISCH BETÄTIGTE SCHEIBENBREMSE FÜR NUTZFAHRZEUGE**
PNEUMATICALLY OR ELECTROMECHANICALLY ACTUATED DISK BRAKE FOR UTILITY VEHICLES
FREIN À DISQUE À ACTIONNEMENT PNEUMATIQUE OU ELECTROMECANIQUE POUR VÉHICULES UTILITAIRES

(30) Priorität: 01.12.2014 DE 102014017715
(43) Veröffentlichungstag der Anmeldung: 22.11.2017
(73) Patentinhaber: WABCO Europe BVBA, 1170 Brussels (BE)
(72) Erfinder: BEYER, Frank, 68239 Mannheim (DE); JÄGER, Hellmut, 67067 Ludwigshafen (DE); KLOOS, Eugen, 68519 Viernheim (DE)
(74) Vertreter: Lauerwald, Jörg
(86) Internationale Anmeldenummer: PCT/EP2015/002340
(87) Internationale Veröffentlichungsnummer: WO 2016/087024

(56) Entgegenhaltungen:
- EP-A2- 2 392 835
- JP-A- H0 932 870
- US-A- 4 533 025

## Beschreibung

Die Erfindung betrifft eine pneumatisch oder elektromechanisch betätigte Scheibenbremse für Nutzfahrzeuge, mit einer Bremsscheibe mit einer bevorzugten Drehrichtung bei Vorwärtsfahrt, einem die Bremsscheibe umgreifenden Bremsenträger, einem die Bremsscheibe umgreifenden Bremssattel, einem befestigungsseitigen Bremsbelag mit einem Reibmaterial, der sich beim Bremsen in Umfangsrichtung an einem befestigungsseitigen Bereich des Bremsenträgers bremsscheibenauslaufseitig abstützt, wobei eine befestigungsseitige Schwerelinie in Axialrichtung der Bremse durch den Schwerpunkt seines Reibmaterials läuft, einer eine Andrückeinrichtung aufweisenden Zuspanneinrichtung auf einer Seite der Bremsscheibe, die beim Bremsen den befestigungsseitigen Bremsbelag gegen die Bremsscheibe drückt, wobei die Andrückeinrichtung eine Zentralachse aufweist, die in Axialrichtung der Bremse liegt, und mit einem felgenseitigen Bremsbelag mit Reibmaterial, der sich beim Bremsen in Umfangsrichtung an einem felgenseitigen Bereich des Bremsenträgers bremsscheibenauslaufseitig abstützt, wobei eine felgenseitige Schwerelinie in Axialrichtung der Bremse durch den Schwerpunkt seines Reibmaterials läuft, wobei die befestigungsseitige Schwerelinie im Ruhezustand der Bremse mit einem vorbestimmten ersten Versatz in Richtung auf die Einlaufseite der Bremsscheibe bei bevorzugter Drehrichtung zu der Zentralachse angeordnet ist. Eine solche Scheibenbremse ist aus der EP 2 392 835 A2 bekannt. Der erste Versatz der befestigungsseitigen Schwerelinie soll dabei einem Schrägverschleiß vorbeugen.

Es hat sich aber herausgestellt, daß die in der EP 2 392 835 A2 vorgesehenen Maßnahmen für die Erreichung der angestrebten Vermeidung von Schrägverschleiß unzureichend sind. Dies gilt insbesondere im Hinblick auf die verschiedenen Einbaulagen der Bremse in dem Nutzfahrzeug. So können die Bremsen beispielsweise in Vorwärtsfahrt gesehen entweder vor oder hinter der Radachse liegen, also beispielsweise in 9-Uhr-Position oder 3-Uhr-Position. Da insbesondere Nutzfahrzeugscheibenbremsen wegen ihrer Baugröße für Reifengrößen von beispielsweise 16 bis 25 Zoll (406 bis 635 mm) und ihrer stabilen Gußausführung ein relativ hohes Eigengewicht haben, kann sich über das Gewicht des Gleitsattels eine Schrägstellung einstellen, die dann beim Bremsvorgang zu einer ungleichmäßigen Belaganlage mit tangentialem Schrägverschleiß auf der Felgenseite führt.

Der Erfindung liegt die Aufgabe zugrunde, die aus der EP 2 392 835 A2 bekannte Scheibenbremse derart weiterzubilden, daß der Schrägverschleiß weiter verringert oder gar vermieden ist.

Erfindungsgemäß wird die gestellte Aufgabe bei einer Scheibenbremse der eingangs genannten Art dadurch gelöst, daß die felgenseitige Schwerelinie entweder mit einem vorbestimmten zweiten Versatz in Richtung auf die Einlaufseite der Bremsscheibe bei bevorzugter Drehrichtung zu der Zentralachse angeordnet ist, der dem ersten Versatz nicht gleich ist, oder mit einem dritten Versatz in Richtung auf die Auslaufseite der Bremsscheibe bei bevorzugter Drehrichtung zu der Zentralachse angeordnet ist.

Es wird also nicht nur die Schwerelinie des betätigungsseitigen Bremsbelages, der auch als zuspannseitiger Bremsbelag bezeichnet wird, bezüglich der Zentralachse versetzt, sondern vielmehr auch die felgenseitige Schwerelinie, und zwar nicht nur bezüglich der Zentralachse, sondern auch bezüglich der befestigungsseitigen Schwerelinie.

Ob die felgenseitige Schwerelinie in Richtung auf die Einlaufseite der Bremsscheibe bei bevorzugter Drehrichtung oder in Richtung auf die Auslaufseite versetzt wird, hängt insbesondere davon ab, in welcher Einbaulage die Scheibenbremse an dem Fahrzeug angebracht wird. Je nach geplanter Einbaulage liegt mithin die felgenseitige Schwerelinie vor oder hinter der Bremsenachse.

An dieser Stelle sei darauf hingewiesen, daß sich die Erfindung insbesondere auf Bremsen bezieht, bei denen eine einzige Andrückeinrichtung vorgesehen ist. Eine solche Andrückeinrichtung ist in der Regel von einem stempelartigen Kolben oder von einer Druckspindel gebildet.

Die US 3,422,935 A zeigt zwar eine Scheibenbremse, bei der sowohl die befestigungsseitige Schwerelinie als auch die felgenseitige Schwerelinie bezüglich der Zentralachse versetzt sind. Bei dieser Scheibenbremse sind jedoch die mechanischen Verhältnisse anders, weil der Bremsenträger ein sogenannter plattenförmiger Bremsenträger ist, der die Bremsscheibe nicht umgreift, weshalb es keinen felgenseitigen Bremsenträgerbereich gibt, an dem sich ein Bremsbelag abstützen könnte. Der felgenseitige Bremsbelag stützt sich vielmehr in Umfangsrichtung ausschließlich an dem Bremssattel ab. Schrägverschleiß geht daher insbesondere auf Schrägstellungen des Bremssattels zurück, weil der Bremssattel zusätzlich die tangentialen Bremsumfangsmomente beim Bremsvorgang direkt aufnehmen und in das Festteil - hier der plattenförmige Bremsenträger - übertragen muss. Anders bei der erfindungsgemäßen Scheibenbremse, bei der insbesondere der felgenseitige Bremsbelag in Umfangsrichtung an dem befestigungsseitigen Bereich des Bremsenträgers bremsscheibenauslaufseitig abgestützt ist, weshalb Schrägstellungen des Sattels nicht in Schrägverschleiß des felgenseitigen Bremsbelages resultieren. Hier gehen die Bremsumfangsmomente beider Bremsbeläge bei einem Bremsvorgang in den Bremsenträger.

Weitere Beispiele für Scheibenbremsen mit plattenförmigem Bremsenträger, also mit einem Bremsenträger, der die Bremsscheibe nicht umgreift, weshalb der felgenseitige Bremsbelag sich in Umfangsrichtung an dem Bremssattel abstützt, sind bekannt aus der US 4,533,025, der US 5,022,500, der JP 932870, der US 5,386,890, der US 2007/0256900 und der US 7,461,725. Auch hier wird nachteilig der Bremssattel direkt mit tangentialen Bremsumfangsmomenten belastet. Weiterhin sind hier nachteilig Bremsbeläge mit ungleich zueinander ausgeformten Reibmaterialkonfigurationen / Konturen eingesetzt.

Die Größe des ersten Versatzes, des zweiten Versatzes und des dritten Versatzes sind jeweils abhängig von den Gesamtgegebenheiten der Bremse, insbesondere ihres Gewichts und ihrer Einbaulage. Erfindungsgemäß kann der erste Versatz im Bereich von 1 mm bis 8 mm liegen, bevorzugt 5 mm bis 7,5 mm, weiter bevorzugt 5 mm bis 6,5 mm. Der zweite Versatz kann im Bereich von 1 mm bis 10 mm liegen, bevorzugt 1 mm bis 6 mm, weiter bevorzugt 2 mm bis 5 mm. Der dritte Versatz kann ebenfalls im Bereich von 1 mm bis 10 mm liegen, bevorzugt 1 mm bis 6 mm, weiter bevorzugt 2 mm bis 5 mm.

Nach einer weiter bevorzugten Ausführungsform handelt es sich bei dem Bremssattel um einen Gleitsattel.

Dabei kann der Bremssattel auf einem, zwei oder mehr Führungsbolzen bezüglich des Bremsenträgers axial verschieblich sein. Dadurch ist eine verläßliche Halterung des Bremssattels gegeben.

Im Rahmen der Erfindung kann vorgesehen sein, daß ein Führungsbolzen ein Spielbolzen und ein anderer Führungsbolzen ein Paßbolzen ist. Dadurch wird den geometrischen und mechanischen Gegebenheiten in besonders zweckmäßiger Weise Rechnung getragen.

Erfindungsgemäß weiter bevorzugt kann vorgesehen sein, daß der Spielbolzen bei bevorzugter Drehrichtung der Bremsscheibe auf der Scheibeneinlaufseite liegt und der Paßbolzen auf der Scheibenauslaufseite. Sofern es die Gegebenheiten erfordern, kann es aber auch vorgesehen sein, daß der Paßbolzen bei bevorzugter Drehrichtung der Bremsscheibe auf der Scheibeneinlaufseite und der Spielbolzen auf der Scheibenauslaufseite liegt.

Der Versatz der beiden Schwerelinien kann erfindungsgemäß prinzipiell auf beliebige Weise erzeugt werden. Nach einer besonders bevorzugten Ausführungsform der Erfindung ist es jedoch vorgesehen, daß eine an dem felgenseitigen Bereich des Bremsenträgers ausgebildete Abstützeinrichtung, die den felgenseitigen Bremsbelag auf der Scheibenauslaufseite abstützt, um einen vierten Versatz bezüglich einer an einem zuspannseitigen Bereich des Bremsenträgers ausgebildeten Abstützeinrichtung versetzt ist, die den zuspannseitigen Bremsbelag beim Bremsen auf der Scheibenauslaufseite abstützt. Bei entsprechender Ausgestaltung der beiden Bremsbeläge, insbesondere im Hinblick auf die Anordnung des Reibmaterials auf der Rückenplatte der Bremsbeläge, können dadurch die gewünschten Versätze der Schwerelinien bezüglich der Zentralachse eingestellt werden. Somit sind beide Reibmaterialien bzw. beide Bremsbeläge nicht auf das Zentrum der Druckfläche vom Kolben bzw. der Druckspindel ausgerichtet.

Zur Vermeidung von Deformationen angesichts der Belastung des befestigungsseitigen Bremsbelags kann vorgesehen sein, daß die Rückenplatte des befestigungsseitigen Bremsbelages dicker ist als diejenige des felgenseitigen Bremsbelages. Dies gilt insbesondere im Hinblick darauf, daß die Andrückeinrichtung in der Regel nicht auf die komplette befestigungsseitige Fläche des befestigungsseitigen Bremsbelages drückt.

Um aber Material und Kosten zu sparen, kann es erfindungsgemäß vorgesehen sein, daß die Rückenplatte des befestigungsseitigen Bremsbelages in der Mitte dicker ist als am Rand. Dadurch wird sie nur dort verstärkt, wo die Andrückeinrichtung angreift.

Zur weiteren Materialeinsparung kann es schließlich erfindungsgemäß bevorzugt vorgesehen sein, daß die Dickenzunahme auf Rippen und/oder Noppen zurückgeht.

Im Folgenden ist die Erfindung anhand eines bevorzugten Ausführungsbeispiels unter Bezugnahme auf die beiliegende Zeichnung mit weiteren Einzelheiten näher erläutert. Dabei zeigen
- Figur 1: eine schematische perspektivische Ansicht einer Scheibenbremse nach einem bevorzugten Ausführungsbeispiel der Erfindung,
- Figur 2: eine teilweise geschnittene Draufsicht auf die Bremse,
- Figur 3: eine Draufsicht auf den Bremsenträger der Bremse nach den Figuren 1 und 2,
- Figur 4: die gleiche Ansicht wie Figur 3, jedoch mit eingesetzten Bremsbelägen und mit einer in Kolbenform ausgeführten Andrückeinrichtung, und
- Figur 5: eine Axialansicht der Einzelteile aus Figur 4.

Scheibenbremsen werden generell beidseitig einer Fahrzeugachse verbaut, so daß in bevorzugter Fahrtrichtung in Vorwärtsrichtung von einer linken und einer rechten Bremse gesprochen wird. Die kompletten Scheibenbremsen sind dann spiegelbildlich zueinander. In diese bevorzugte Fahrtrichtung drehen dementsprechend auch die abzubremsenden Bremsscheiben, wobei die Geschwindigkeiten bei Vorwärtsfahrt in der Regel höher sind als bei Rückwärtsfahrt. Dementsprechend treten die Bremsenbelastungen mit entsprechendem Belagverschleiß in weit überwiegendem Maße bei Vorwärtsbremsungen auf.

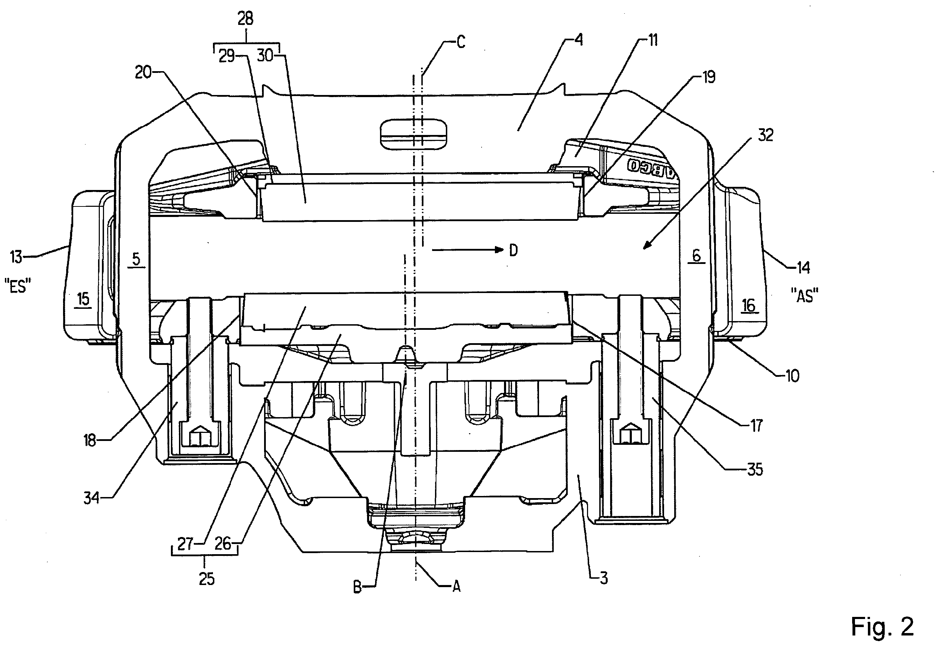

In der folgenden Beschreibung ist hinsichtlich des Aufbaus bzw. der Teileposition Bezug auf die bevorzugte Drehrichtung D der Bremsscheibe in Vorwärtsfahrt genommen. Weiterhin wird derjenige Teilbereich der Scheibenbremse, in den die drehende Bremsscheibe mit Drehrichtung D einläuft, als Bremseneinlaufseite "ES" bezeichnet. Derjenige Bereich, aus dem die Bremsscheibe herausläuft, wird als Bremsscheibenauslaufseite "AS" bezeichnet (siehe Figur 2). In eingebautem Zustand erstreckt sich die Scheibenbremse von der Befestigungs- bzw. Zuspannseite bis in den Bereich der Radfelge. Daher wird nachfolgend von "Zuspann"- bzw. "Befestigungs"- und "Felgenseite" gesprochen. Über die Befestigungsseite am Bremsenträger, der das Festteil darstellt, erfolgt die Halterung am Achsteil.

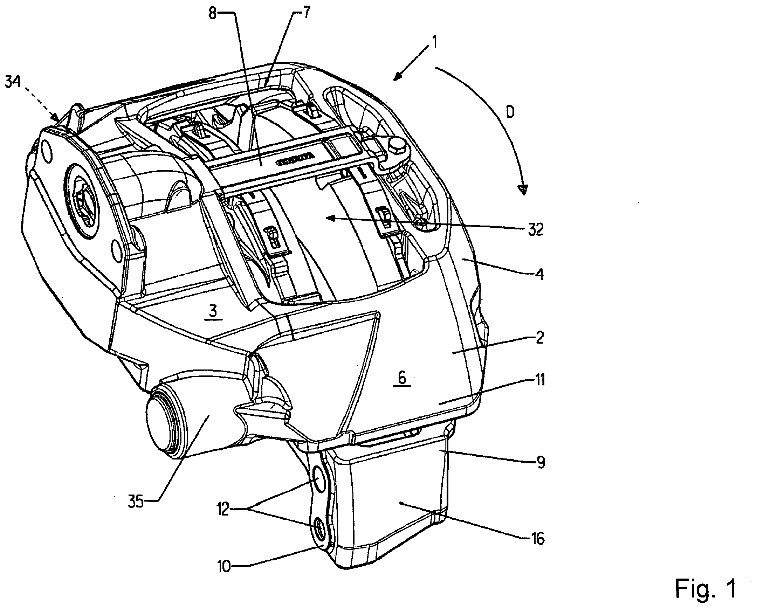

Bei der in den Zeichnungen dargestellten Scheibenbremse handelt es sich um eine linke Gleitsattelscheibenbremse 1, die pneumatisch oder elektromechanisch betätigbar ist. Diese Bremse weist nach den Figuren 1 und 2 einen Gleitsattel 2 und einen Bremsenträger 9 auf, wobei der Bremsenträger 9 auf seiner Befestigungsseite 10 an einem nicht gezeigten Achsteil des Fahrzeugs befestigt ist. Dazu sind Befestigungsöffnungen 12 vorgesehen, in die zur Befestigung Schrauben eingeschraubt werden. Der Bremssattel 2 weist eine Zuspannseite 3 mit einer nicht gezeigten innen liegenden Zuspanneinrichtung auf, die mittels einer an der Rückseite des Bremssattels 2 befestigten pneumatischen oder elektromechanischen Betätigungseinrichtung derart aktiviert wird, daß sie einen als Andrückeinrichtung dienenden Einzelkolben 31 in Richtung der Bremsscheibe 32 verschiebt. Bezüglich der Bremsscheibe 32 gegenüberliegend ist die Felgenseite 4 des Sattels. Die beiden Seiten 3 und 4 sind entsprechend der Drehrichtung D der Bremsscheibe 32 über eine einlaufseitige Brückenstrebe 5 und eine auslaufseitige Brückenstrebe 6 starr miteinander verbunden, weshalb die Struktur insgesamt rahmenförmig ist und eine Radialöffnung 7 aufweist. Deren Größe bzw. Länge ist durch den Abstand der Brückenstreben 5 und 6 voneinander bestimmt und entspricht der Länge der beidseits der Bremsscheibe 32 liegenden Bremsbeläge 25 und 28. Sie ist derart bemessen, daß die beiden Bremsbeläge 25 und 28 in einfacher Weise radial ein- und ausgebaut werden können. Ein an dem Bremssattel 2 befestigbarer Niederhalter 8 überspannt die Öffnung 7, um die Bremsbeläge 25 und 28 gegen Verlust zu sichern.

Der Bremsenträger 9 hat eine Befestigungsseite 10 mit den Befestigungsöffnungen 12 und eine bezüglich der Bremsscheibe 32 gegenüberliegende Felgenseite 11. Beide Seiten sind starr miteinander verbunden, und zwar mittels einer einlaufseitigen Strebe 13 und einer auslaufseitigen Strebe 14. Wiederum ist die Gesamtstruktur derart bemessen, daß der Bremsenträger 9 insgesamt rahmenförmig die Bremsscheibe umgreift. Insbesondere überspannt der Bremsenträger 9 mit einem Abschnitt 15 die Bremsscheibe 32 einlaufseitig und mit einem Abschnitt 16 auslaufseitig. Auf diese Weise wird eine Aufnahmeöffnung 33 für einen darin eintauchenden Bereich der Bremsscheibe 32 gebildet. Die Abschnitte 15, 16 liegen räumlich gesehen unter den Brückenstreben 5 und 6 des Bremssattels 2.

Gemäß den Figuren 1 und 2 ist der Gleitsattel 2 bei dem in der Zeichnung dargestellten Ausführungsbeispiel auf zwei Führungsbolzen 34, 35 axial verschieblich geführt, wobei die beiden Führungsbolzen 34, 35 am Bremsenträger 9 befestigt sind und in Öffnungen des Bremssattels 2 eintauchen. Bei dem gezeigten Ausführungsbeispiel handelt es sich bei dem Bolzen 34 um einen Spielbolzen, der auf der Scheibeneinlaufseite ES liegt. Der Bolzen 35 ist ein Paßbolzen und liegt auf der Scheibenauslaufseite AS. Es sei angemerkt, daß - wie bereits oben ausgeführt - die Lagen der Führungsbolzen abhängig sind von den jeweiligen Einbauverhältnissen.

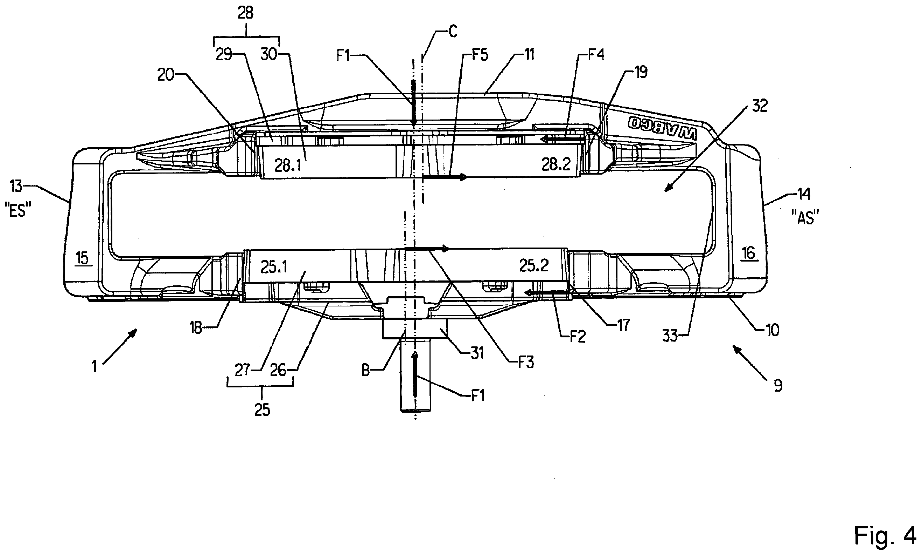

Auf der Befestigungsseite 10 und der Felgenseite 11 des Bremsenträgers 9 erstrecken sich starr verbundene und radial nach außen verlaufende Abstütz- bzw. Führungshörner. Dazu gehört befestigungsseitig auf der Scheibenauslaufseite das Horn 17 und auf der Scheibeneinlaufseite das Horn 18. Felgenseitig liegt auf der Scheibenauslaufseite das Horn 19 und auf der Scheibeneinlaufseite das Horn 20. Zwischen den Hörnern 17 und 18 ist der befestigungsseitige Bremsbelag 25 geführt und abgestützt, der eine Rückenplatte 26 und Reibmaterial 27 aufweist. Zwischen den Hörnern 19 und 20 ist der felgenseitige Bremsbelag 28 geführt und abgestützt, der eine Rückenplatte 29 und Reibmaterial 30 aufweist. Radial einwärts sind die beiden Bremsbeläge 25 und 28 auf der Befestigungsseite 10 zum Scheibenauslauf auf der Radialauflage 21 und zum Scheibeneinlauf auf der Radialauflage 22 abgestützt. Auf der Felgenseite 11 dienen dazu zum Scheibenauslauf die Radialauflage 23 und zum Scheibeneinlauf die Radialauflage 24. Damit sind die Bremsbeläge 25 und 28 in Umfangsrichtung an den Hörnern 17 bis 20 abgestützt und geführt, während zur Abstützung und Führung radial einwärts die Radialauflagen 21 bis 24 dienen. In der bevorzugten Drehrichtung D bilden somit die Hörner 17 und 19 die Widerlager bei einem Bremsvorgang. Wie insbesondere in Figur 4 gezeigt, sind die beiden Bremsbeläge 25 und 28 gleich lang. Auch die Flächen der Reibbeläge 27 und 30 sind gleich lang. Sie erstrecken sich von deren Einlaufseiten 25.1 bzw. 28.1 bis zu deren Auslaufseiten 25.2 bzw. 28.2. Damit wird auf beiden Seiten der Bremsscheibe 32 ein maximales Reibband zur Verfügung gestellt. Dies ist insbesondere bei bekannten PKW-Scheibenbremsen nicht der Fall. Dort werden die Hauptflächen der Rückenplatten nur jeweils zum Teil mit Reibmaterial belegt, wobei das Reibmaterial bezüglich der jeweiligen Rückenplatten versetzt ist, um einem Schrägverschleiß entgegenzuwirken. Diese Teilbelegung der Rückenplatte mit Reibmaterial ist unwirtschaftlich und verringert die mit der Bremse erzeugbare Bremskraft. Die vorliegende Erfindung ermöglicht demgegenüber eine Vermeidung des Schrägverschleißes ohne Vergeudung von Reibfläche.

Wird die Scheibenbremse 1 betätigt, so wird der Einzelkolben 31 entlang seiner Zentralachse A gegen den befestigungsseitigen Bremsbelag 25 geschoben und drückt diesen mit einer Bremskraft gegen die Bremsscheibe 32. Mit steigender Bremskraft gleitet der Gleitsattel 2 über die Reaktionskraft auf den beiden Führungsbolzen 34 und 35 axial und drückt mit der relativ großflächigen Felgenseite 4 den felgenseitigen Bremsbelag 28 gegen die Bremsscheibe 32.

Wie aus den Figuren 2 bis 5 ersichtlich, sind zur Vermeidung eines beidseitigen Tangentialverschleißes sowohl die befestigungsseitige Schwerelinie B des befestigungsseitigen Bremsbelages 25 als auch die felgenseitige Schwerelinie C des felgenseitigen Bremsbelages 28 gegenüber der Zentralachse A des Einzelkolbens 31 versetzt.

In Bezug auf die bevorzugte Drehrichtung D der Bremsscheibe 32 ist der befestigungsseitige Bremsbelag 25 zwischen seinen Hörnern 17 und 18 und den Radialauflagen 21, 22 derart gelagert, daß seine Schwereachse B gegenüber der Zentralachse A des Einzelkolbens 31 in Richtung der Bremsscheibeneinlaufseite ES versetzt ist. Die befestigungsseitige Schwereachse B des befestigungsseitigen Bremsbelages 25 liegt mittig zwischen den Belagenden, hier Einlaufseite 25.1 und Auslaufseite 25.2.

Demgegenüber ist unter Annahme der gleichen Drehrichtung D der Bremsscheibe 32 der felgenseitige Bremsbelag 28 zwischen den Hörnern 19 und 20 und den Radialauflagen 23 und 24 derart gelagert, daß seine Schwereachse C gegenüber der Zentralachse A des Einzelkolbens 31 in Richtung der Bremsscheibenauslaufseite AS versetzt ist. Die Schwereachse C des felgenseitigen Bremsbelags 28 liegt mittig zwischen den Belagenden, hier Einlaufseite 28.1 und Auslaufseite 28.2.

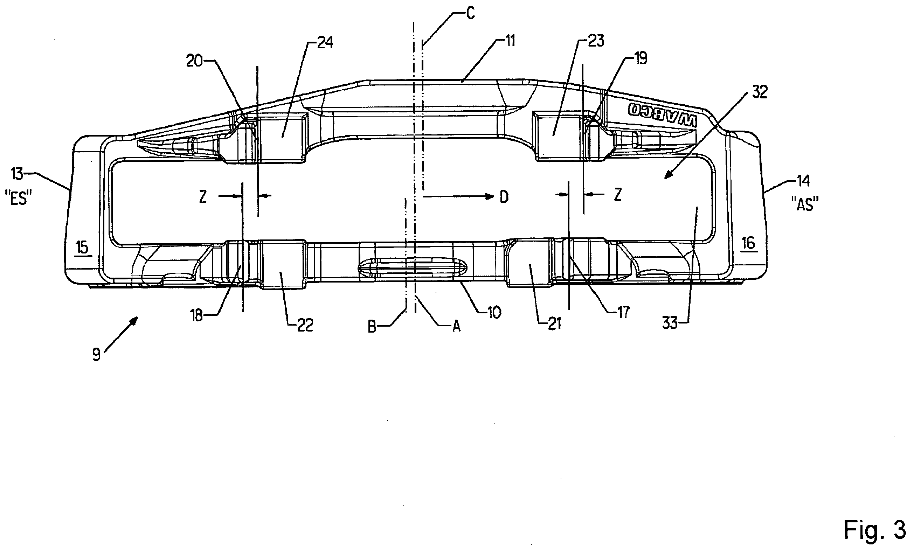

Um den obigen Versatz der befestigungsseitigen Schwerelinie B und der felgenseitigen Schwerelinie C zu gewährleisten, sind die Hörner 17, 18, 19 und 20 entsprechend versetzt. Insbesondere ist das Horn 19 gegenüber dem Horn 17 versetzt. Ferner ist das Horn 20 gegenüber dem Horn 18 versetzt. Der jeweilige Versatz ist in Figur 3 mit "Z" bezeichnet. Die Schwerelinien B und C sowie die Zentralachse A liegen alle an unterschiedlichen Positionen. Keine fällt mit einer anderen zusammen. Die versetzten Positionen werden bereits im Ruhezustand der Bremse eingenommen, und nicht etwa erst unter dynamischen Belastungen durch seitliche Bewegungen über Elastizitäten und anderes, wie dies teilweise bei bekannten Bremsen der Fall ist.

Der als Andrückeinrichtung dienende Einzelkolben 31 wirkt beim Bremsen mit einer Kraft F₁ (vgl. Figur 4) auf die Rückenplatte 26 des befestigungsseitigen Bremsbelages 25, um das Reibmaterial 27 gegen die Bremsscheibe 32 zu drücken. Dabei wird die Kraft F₁ über eine relativ kleine Andrückfläche des Einzelkolbens 31 auf eine dazu im Verhältnis größere/lange Fläche der Rückenplatte 26 eingeleitet. Dies führt bei drehender Bremsscheibe 32 an dem Reibmaterial 27 zu einer Reibkraft F₃, die in Umfangsrichtung auf den Bremsbelag 25 wirkt und ihn zu drehen versucht. Über die Abstützkraft F₂ an dem Horn 17 wird dies noch verstärkt. Da aber die Schwerelinie B des befestigungsseitigen Bremsbelags 25 gegenüber der Zentralachse A des Einzelkolbens 31 in Richtung zur Bremsscheibeneinlaufseite ES versetzt ist, wird der Drehung des Bremsbelages 25 im Uhrzeigersinn durch Veränderung der Hebelverhältnisse entgegengewirkt, was einem Tangentialverschleiß auf der Bremsscheibeneinlaufseite ES entgegenwirkt.

Die Bremskraft F₁ erzeugt am felgenseitigen Bremsbelag 28 aus der Reaktion eine Gegenkraft F₁'. Dies führt an dem Reibmaterial 30 des felgenseitigen Bremsbelags 28 zu einer Reibkraft F₅, die an dem Horn 19 eine Abstützkraft F₄ erzeugt. Da die Kräfte F₅ und F₄ mit der Schwerelinie C versetzt sind, wird eine Drehung entgegen dem Uhrzeigersinn eingeleitet. Durch den Versatz der Schwerelinie C gegenüber der Zentralachse A wird am felgenseitigen Bremsbelag 28 ein gerichtetes Zusatzmoment erzeugt, das Einflüsse der Gewichtskraft des Bremssattels 2 kompensiert. Dies gilt insbesondere bei Anbringung des Bremssattels vor oder hinter der Bremsachse, also beispielsweise in 3-Uhr-Position oder 9-Uhr-Position.

Der Versatz der Schwerelinie B zu der Zentralachse A kann je nach Bremsen- und Belaggröße in dem Bereich von 1 mm bis 8 mm liegen, bevorzugt 5 mm bis 7,5 mm, weiter bevorzugt 5 mm bis 6,5 mm. Der Versatz der Schwerelinie C gegenüber der Zentralachse A kann im Bereich von 1 mm bis 10 mm liegen, bevorzugt 1 mm bis 6 mm, weiter bevorzugt 1 mm bis 5 mm. Bei erfindungsgemäß angestrebtem vollflächigem Belegen der Rückenplatten 26 und 29 mit Reibmaterial 27 bzw. 30 werden diese Versatzstrecken durch entsprechende Vorgabe des Versatzes Z erreicht.

Insbesondere durch den entsprechend gewählten Versatz der felgenseitigen Schwerelinien B bezüglich der Zentralachse A wird ein auf die Einbaulage der Scheibenbremse zurückgehender tangentialer Schrägverschleiß kompensiert.

Bei dem in der Zeichnung dargestellten Ausführungsbeispiel mit den dortigen Lagen der Führungsbolzen 34 und 35 ist der felgenseitige Bremsbelag 28 in Richtung der Scheibenauslaufseite AS versetzt. Liegen andere Einbauverhältnisse und Lagen, insbesondere der Führungsbolzen 34 und 35 vor, kann der felgenseitige Bremsbelag 28 auch in Richtung der Bremsscheibeneinlaufseite ES bezüglich der Zentralachse A des Einzelkolbens 31 versetzt sein. Die Schwerelinie B ist jedoch immer gegenüber der Zentralachse A zur Scheibeneinlaufseite ES hin versetzt.

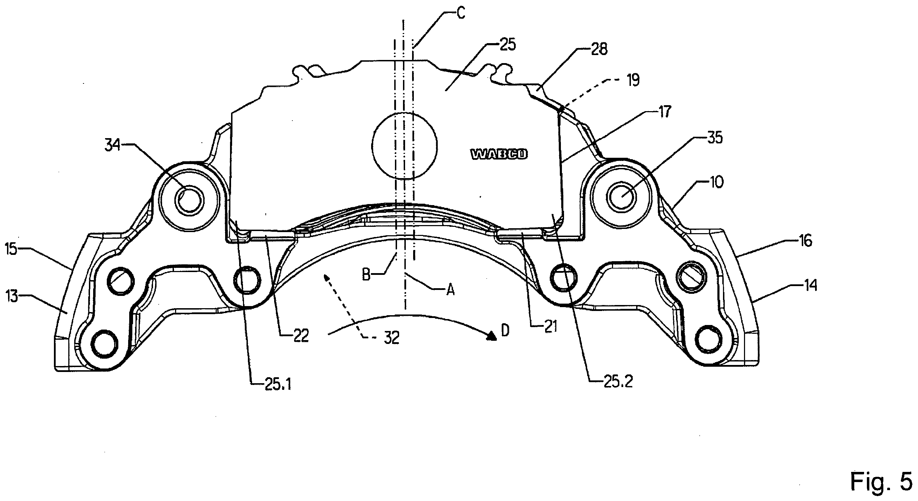

Figur 5 zeigt mit Blickrichtung auf die Befestigungsseite 10 des Bremsenträgers 9 die oben erläuterten Teilepositionen. Hier sind die zueinander versetzten Schwerelinien B und C der schematisch dargestellten Bremsbeläge 25 und 28, einschließlich des Versatzes bezüglich der Zentralachse A, ersichtlich. Man erkennt auch die einander überlappenden Außenkonturen der Bremsbeläge 25 und 28.

Bei schweren Nutzfahrzeugbremsen, beispielsweise für Räder ab 22 Zoll (585,8 mm), kann die Rückenplatte 26 des befestigungsseitigen Bremsbelages 25 zur Vermeidung von Deformationen beim Bremsvorgang wegen der relativ kleinen Anlagefläche des Einzelkolbens 31 dicker ausgeführt sein als die Rückenplatte 29 des felgenseitigen Bremsbelages 28. Bei dem in der Zeichnung dargestellten Ausführungsbeispiel der Erfindung weist die Rückenplatte 26, von ihrer Grunddicke ausgehend, in ihrem weiteren Verlauf hin zu dem Einzelkolben 31 eine Struktur auf, die sich annähernd von den beiden Endseiten 25.1 und 25.2 beginnend in Richtung auf den Einzelkolben 31 hin verjüngt. Diese Trapezstruktur, die insbesondere den Figuren 2 und 4 zu entnehmen ist, kann eine Rippen- und/oder Noppenstruktur sein. Es kann auch eine Vollstruktur sein. Der Vorteil dieser Struktur ist eine Gewichts- und Materialeinsparung gegenüber einer Lösung mit durchgehend gleicher Rückenplattendicke, wobei dennoch Deformationen vermieden werden können. Bei dem in der Zeichnung dargestellten Ausführungsbeispiel kann die Rückenplatte aus Gußwerkstoff und im Gießverfahren oder als Schmiedeteil hergestellt sein.

Normale Rückenplatten können hingegen als Blechstanz- bzw. -umformteil hergestellt werden.

Die in den Zeichnungen dargestellten Größen und Größenverhältnisse sind schematisch zu verstehen und dienen nur der Erläuterung. Tatsächlich sind sie abhängig von der Bremsengröße und den Einbauverhältnissen.

Die in der obigen Beschreibung, den Ansprüchen sowie der Zeichnung offenbarten Merkmale der Erfindung können sowohl einzeln als auch in beliebigen Kombinationen für die Verwirklichung der Erfindung in ihren verschiedenen Ausführungsformen wesentlich sein.

### Bezugszeichenliste deutsche Patentanmeldung 2014P00073DE

- D: Scheibendrehrichtung Vorwärtsfahrt bevorzugt
- ES: Scheibeneinlaufseite (einlaufseitig)
- AS: Scheibenauslaufseite (auslaufseitig)
- A: Zentralachse
- B: felgenseitige Schwerelinie
- C: befestigungsseitige Schwerelinie
- Z: Versatz zwischen den Abstütz-/Führungshörnern
- 1: Gleitsattelscheibenbremse
- 2: Gleitsattel
- 3: Zuspannseite Gleitsattel
- 4: Felgenseite Gleitsattel
- 5: Brückenstrebe einlaufseitig Gleitsattel
- 6: Brückenstrebe auslaufseitig Gleitsattel
- 7: Montage-/Demontageöffnung für Bremsbeläge
- 8: Niederhalter für Bremsbeläge
- 9: Bremsenträger / Festteil
- 10: Befestigungsseite (innenseitig) Bremsenträger
- 11: Felgenseite (außenseitig) Bremsenträger
- 12: Befestigungsöffnungen Befestigungsseite Bremsenträger
- 13: einlaufseitige Strebe Bremsenträger
- 14: auslaufseitige Strebe Bremsenträger
- 15: Abschnitt einlaufseitig Bremsenträger
- 16: Abschnitt auslaufseitig Bremsenträger
- 17: Abstütz-/Führungshorn auslaufseitig Zuspannseite
- 18: Abstütz-/Führungshorn einlaufseitig Zuspannseite
- 19: Abstütz-/Führungshorn auslaufseitig Felgenseite
- 20: Abstütz-/Führungshorn einlaufseitig Felgenseite
- 21: Radialauflage Führungshorn auslaufseitig Zuspannseite
- 22: Radialauflage einlaufseitig Zuspannseite
- 23: Radialauflage auslaufseitig Felgenseite
- 24: Radialauflage einlaufseitig Felgenseite
- 25: Bremsbelag Zuspannseite
- 25.1: Einlaufseite Bremsbelag Zuspannseite
- 25.2: Auslaufseite Bremsbelag Zuspannseite
- 26: Rückenplatte Bremsbelag Zuspannseite
- 27: Reibmaterial Zuspannseite
- 28: Bremsbelag Felgenseite
- 28.1: Einlaufseite Bremsbelag Felgenseite
- 28.2: Auslaufseite Bremsbelag Felgenseite
- 29: Rückenplatte Bremsbelag Felgenseite
- 30: Reibmaterial Felgenseite
- 31: Einzelkolben
- 32: Bremsscheibe
- 33: Öffnung für Bremsscheibe im Bremsenträger
- 34: Führungsbolzen Einlaufseite
- 35: Führungsbolzen Auslaufseite

## Patentansprüche

1. Pneumatisch oder elektromechanisch betätigte Scheibenbremse für Nutzfahrzeuge, mit
einer Bremsscheibe (32) mit einer bevorzugten Drehrichtung (D) bei Vorwärtsfahrt,
einem die Bremsscheibe (32) umgreifenden Bremsenträger (9),
einem die Bremsscheibe umgreifenden Bremssattel (2),
einem befestigungsseitigen Bremsbelag (25) mit einem Reibmaterial (27), der sich beim Bremsen in Umfangsrichtung an einem befestigungsseitigen Bereich (10) des Bremsenträgers (9) bremsscheibenauslaufseitig abstützt, wobei eine befestigungsseitige Schwerelinie (B) in Axialrichtung der Bremse durch den Schwerpunkt seines Reibmaterials (27) läuft,
einer eine Andrückeinrichtung (31) aufweisenden Zuspanneinrichtung auf einer Seite der Bremsscheibe (32), die beim Bremsen den befestigungsseitigen Bremsbelag (25) gegen die Bremsscheibe (32) drückt, wobei die Andrückeinrichtung (31) eine Zentralachse (A) aufweist, die in Axialrichtung der Bremse liegt, und
einem felgenseitigen Bremsbelag (28) mit Reibmaterial (30), der sich beim Bremsen in Umfangsrichtung an einem felgenseitigen Bereich (11) des Bremsenträgers (9) bremsscheibenauslaufseitig abstützt, wobei eine felgenseitige Schwerelinie (C) in Axialrichtung der Bremse durch den Schwerpunkt seines Reibmaterials (30) läuft, wobei
die befestigungsseitige Schwerelinie (B) im Ruhezustand der Bremse mit einem vorbestimmten ersten Versatz (A-B) in Richtung auf die Einlaufseite der Bremsscheibe (32) bei bevorzugter Drehrichtung (D) zu der Zentralachse (A) angeordnet ist,
**dadurch gekennzeichnet, daß**
die felgenseitige Schwerelinie (C) entweder mit einem vorbestimmten zweiten Versatz in Richtung auf die Einlaufseite der Bremsscheibe (32) bei bevorzugter Drehrichtung (D) zu der Zentralachse (A) angeordnet ist, der dem ersten Versatz (A-B) nicht gleich ist, oder mit einem dritten Versatz (A-C) in Richtung auf die Auslaufseite der Bremsscheibe (32) bei bevorzugter Drehrichtung (D) zu der Zentralachse (A) angeordnet ist.

2. Scheibenbremse nach Anspruch 1, **dadurch gekennzeichnet, daß** der erste Versatz (A-B) im Bereich von 1 mm bis 8 mm liegt, bevorzugt 5 mm bis 7,5 mm, weiter bevorzugt 5 mm bis 6,5 mm.

3. Scheibenbremse nach Anspruch 1 oder 2, **dadurch gekennzeichnet, daß** der zweite Versatz im Bereich von 1 mm bis 10 mm liegt, bevorzugt 1 mm bis 6 mm, weiter bevorzugt 2 mm bis 5 mm.

4. Scheibenbremse nach Anspruch 1 oder 2, **dadurch gekennzeichnet, daß** der dritte Versatz (A-C) im Bereich von 1 mm bis 10 mm liegt, bevorzugt 1 mm bis 6 mm, weiter bevorzugt 2 mm bis 5 mm.

5. Scheibenbremse nach einem der vorangehenden Ansprüche, **dadurch gekennzeichnet, daß** der Bremssattel (2) ein Gleitsattel ist.

6. Scheibenbremse nach Anspruch 5, **dadurch gekennzeichnet, daß** der Bremssattel (2) auf einem, zwei oder mehr Führungsbolzen (34, 35) bezüglich des Bremsenträgers (9) axial verschieblich ist.

7. Scheibenbremse nach Anspruch 6, **dadurch gekennzeichnet, daß** ein Führungsbolzen (34) ein Spielbolzen und ein anderer Führungsbolzen (35) ein Paßbolzen ist.

8. Scheibenbremse nach Anspruch 7, **dadurch gekennzeichnet, daß** der Spielbolzen (34) bei bevorzugter Drehrichtung (D) der Bremsscheibe (32) auf der Scheibeneinlaufseite liegt und der Paßbolzen (35) auf der Scheibenauslaufseite liegt.

9. Scheibenbremse nach Anspruch 7, **dadurch gekennzeichnet, daß** der Spielbolzen bei bevorzugter Drehrichtung der Bremsscheibe auf der Scheibenauslaufseite liegt und der Paßbolzen auf der Scheibeneinlaufseite liegt.

10. Scheibenbremse nach einem der vorangehenden Ansprüche, **dadurch gekennzeichnet, daß** eine an dem felgenseitigen Bereich (11) des Bremsenträgers (9) ausgebildete Abstützeinrichtung (19); die den felgenseitigen Bremsbelag (28) auf der Scheibenauslaufseite abstützt, um einen vierten Versatz (Z) bezüglich einer an einem zuspannseitigen Bereich (10) des Bremsenträgers (9) ausgebildeten Abstützeinrichtung (17) versetzt ist, die den zuspannseitigen Bremsbelag (25) beim Bremsen auf der Scheibenauslaufseite abstützt.

11. Scheibenbremse nach einem der vorangehenden Ansprüche, **dadurch gekennzeichnet, daß** eine Rückenplatte (26) des zuspannseitigen Bremsbelages (25) dicker ist als eine Rückenplatte (29) des felgenseitigen Bremsbelages (28).

12. Scheibenbremse nach einem der vorangehenden Ansprüche, **dadurch gekennzeichnet, daß** eine Rückenplatte (26) des befestigungsseitigen Bremsbelages (25) in der Mitte dicker ist als am Rand.

13. Scheibenbremse nach Anspruch 12, **dadurch gekennzeichnet, daß** die Dickenzunahme auf Rippen und/oder Noppen zurückgeht.

## Claims

1. Pneumatically or electromechanically actuated disk brake for utility vehicles, comprising
a brake disk (32) with a preferred direction of rotation (D) in forward travel,
a brake carrier (9) extending around the brake disk (32),
a brake caliper (2) extending around the brake disk,
a fastening-side brake pad (25) with a friction material (27), which brake pad, during braking, is supported in the circumferential direction against a fastening-side region (10) of the brake carrier (9) on the brake disk exit side, wherein a fastening-side line of gravity (B) passes through the center of gravity of the friction material (27) of said a fastening-side brake pad in the axial direction of the brake,
an application device having a pressure-exerting device (31) on one side of the brake disk (32), which application device presses the fastening-side brake pad (25) against the brake disk (32) during braking, wherein the pressure-exerting device (31) has a central axis (A) lying in the axial direction of the brake, and
a rim-side brake pad (28) with friction material (30), which brake pad, during braking, is supported in the circumferential direction against a rim-side region (11) of the brake carrier (9) on the brake disk exit side, wherein a rim-side line of gravity (C) passes through the center of gravity of the friction material (30) of said rim-side brake pad in the axial direction of the brake, wherein
the fastening-side line of gravity (B), in the rest state of the brake, is arranged with a predetermined first offset (A-B) with respect to the central axis (A) in the direction of the entry side of the brake disk (32) in the preferred direction of rotation (D),
**characterized in that**
the rim-side line of gravity (C) is arranged either with a predetermined second offset with respect to the central axis (A) in the direction of the entry side of the brake disk (32) in the preferred direction of rotation (D), which second offset is not equal to the first offset (A-B), or with a third offset (A-C) with respect to the central axis (A) in the direction of the exit side of the brake disk (32) in the preferred direction of rotation (D).

2. Disk brake according to Claim 1, **characterized in that** the first offset (A-B) lies within the range from 1 mm to 8 mm, preferably 5 mm to 7.5 mm, further preferably 5 mm to 6.5 mm.

3. Disk brake according to Claim 1 or 2, **characterized in that** the second offset lies within the range from 1 mm to 10 mm, preferably 1 mm to 6 mm, further preferably 2 mm to 5 mm.

4. Disk brake according to Claim 1 or 2, **characterized in that** the third offset (A-C) lies within the range from 1 mm to 10 mm, preferably 1 mm to 6 mm, further preferably 2 mm to 5 mm.

5. Disk brake according to any one of the preceding claims, **characterized in that** the brake caliper (2) is a sliding caliper.

6. Disk brake according to Claim 5, **characterized in that** the brake caliper (2) is axially displaceable on one, two or more guide pins (34, 35) with respect to the brake carrier (9).

7. Disk brake according to Claim 6, **characterized in that** one guide pin (34) has free play and another guide pin (35) is close-fitting.

8. Disk brake according to Claim 7, **characterized in that** the pin with free play (34) is located on the disk entry side and the close-fitting pin (35) on the disk exit side, in the preferred direction of rotation (D) of the brake disk (32).

9. Disk brake according to Claim 7, **characterized in that** the pin with free play is located on the disk exit side and the close-fitting pin on the disk entry side, in the preferred direction of rotation of the brake disk.

10. Disk brake according to any one of the preceding claims, **characterized in that** a support device (19) which is formed on the rim-side region (11) of the brake carrier (9) and which supports the rim-side brake pad (28) on the disk exit side, is offset by a fourth offset (Z) with respect to a support device (17) which is formed on an application-side region (10) of the brake carrier (9) and which supports the application-side brake pad (25) on the disk exit side during braking.

11. Disk brake according to any one of the preceding claims, **characterized in that** a back plate (26) of the application-side brake pad (25) is thicker than a back plate (29) of the rim-side brake pad (28).

12. Disk brake according to any one of the preceding claims, **characterized in that** a back plate (26) of the fastening-side brake pad (25) is thicker at the center than at the edge.

13. Disk brake according to Claim 12, **characterized in that** the increase in thickness is effected by means of ribs and/or nubs.

## Revendications

1. Frein à disque à actionnement pneumatique ou électromécanique pour véhicules utilitaires, avec
un disque de frein (32) avec un sens de rotation préféré (D) en marche avant,
un support de frein (9) entourant le disque de frein (32),
un étrier de frein (2) entourant le disque de frein (32),
une garniture de frein côté fixation (25) avec un matériau de friction (27), qui lors du freinage s'appuie en direction périphérique, du côté de la sortie du disque de frein, sur une région côté fixation (10) du support de frein (9), dans lequel une médiane côté fixation (B) s'étend en direction axiale du frein en passant par le centre de gravité de son matériau de friction (27),
un dispositif de serrage présentant un dispositif de pression (31) sur un côté du frein à disque (32), qui lors du freinage presse la garniture de frein côté fixation (25) contre le disque de frein (32), dans lequel le dispositif de pression (31) présente un axe central (A), qui se trouve dans la direction axiale du frein, et
une garniture de frein côté jante (28) avec un matériau de friction (30), qui lors du freinage s'appuie en direction périphérique, du côté de la sortie du disque de frein, sur une région côté jante (11) du support de frein (9), dans lequel une médiane côté jante (C) s'étend en direction axiale du frein en passant par le centre de gravité de son matériau de friction (30),
dans lequel la médiane côté fixation (B) est disposée, dans l'état de repos du frein, avec un premier décalage prédéterminé (A-B) en direction du côté d'entrée du disque de frein (32) pour un sens de rotation préféré (D) par rapport à l'axe central (A), **caractérisé en ce que** la médiane côté jante (C) soit est disposée avec un deuxième décalage prédéterminé en direction du côté d'entrée du disque de frein (32) pour le sens de rotation préféré (D) par rapport à l'axe central (A), lequel n'est pas égal au premier décalage (A-B), soit est disposée avec un troisième décalage (A-C) en direction du côté de sortie du disque de frein (32), pour un sens de rotation préféré (D) par rapport à l'axe central (A).

2. Frein à disque selon la revendication 1, **caractérisé en ce que** le premier décalage (A-B) se situe dans la plage de 1 mm à 8 mm, de préférence de 5 mm à 7,5 mm, et de préférence encore de 5 mm à 6,5 mm.

3. Frein à disque selon la revendication 1 ou 2, **caractérisé en ce que** le deuxième décalage se situe dans la plage de 1 mm à 10 mm, de préférence de 1 mm à 6 mm, et de préférence encore de 2 mm à 5 mm.

4. Frein à disque selon la revendication 1 ou 2, **caractérisé en ce que** le troisième décalage (A-C) se situe dans la plage de 1 mm à 10 mm, de préférence de 1 mm à 6 mm, et de préférence encore de 2 mm à 5 mm.

5. Frein à disque selon l'une quelconque des revendications précédentes, **caractérisé en ce que** l'étrier de frein (2) est un étrier glissant.

6. Frein à disque selon la revendication 5, **caractérisé en ce que** l'étrier de frein (2) peut coulisser axialement sur un, deux ou plus de deux boulons de guidage (34, 35) par rapport au support de frein (9).

7. Frein à disque selon la revendication 6, **caractérisé en ce qu'**un boulon de guidage (34) est un boulon avec jeu et un autre boulon de guidage (35) est un boulon ajusté.

8. Frein à disque selon la revendication 7, **caractérisé en ce que**, pour le sens de rotation préféré (D) du disque de frein (32), le boulon avec jeu (34) est situé sur le côté d'entrée du disque et le boulon ajusté (35) est situé sur le côté de sortie du disque.

9. Frein à disque selon la revendication 7, **caractérisé en ce que**, pour le sens de rotation préféré du disque de frein, le boulon avec jeu est situé sur le côté de sortie du disque et le boulon ajusté est situé sur le côté d'entrée du disque.

10. Frein à disque selon l'une quelconque des revendications précédentes, **caractérisé en ce qu'**un dispositif de soutien (19) formé sur la région côté jante (11) du support de frein (9), qui soutient la garniture de frein côté jante (28) sur le côté de sortie du disque, est décalé d'un quatrième décalage (Z) par rapport à un dispositif de soutien (17) formé sur une région côté serrage (10) du support de frein (9), qui soutient lors du freinage la garniture de frein côté serrage (25) sur le côté de sortie du disque.

11. Frein à disque selon l'une quelconque des revendications précédentes, **caractérisé en ce qu'**une plaque arrière (26) de la garniture de frein côté serrage (25) est plus épaisse qu'une plaque arrière (29) de la garniture de frein côté jante (28).

12. Frein à disque selon l'une quelconque des revendications précédentes, **caractérisé en ce qu'**une plaque arrière (26) de la garniture de frein côté fixation (25) est plus épaisse au centre que sur le bord.

13. Frein à disque selon la revendication 12, **caractérisé en ce que** l'augmentation d'épaisseur est due à des nervures et/ou à des bossages.
